# EUROPEAN PATENT APPLICATION

(11) **EP 4 369 549 A1**
(43) Date of publication of application: **15.05.2024**
(21) Application number: 21949126.3
(22) Date of filing: 02.12.2021
(51) Int. Cl.: H02J 3/36

(54) **FLEXIBLE DIRECT-CURRENT TRACTION POWER SUPPLY SYSTEM CONNECTED WITH DISTRIBUTED EXTERNAL POWER SUPPLIES, AND OPERATING METHOD THEREFOR**

(30) Priority: 08.07.2021 CN 202110773536
(71) Applicant: Tsinghua University, Beijing 100084 (CN)
(72) Inventor: LI, Xiaoqian, Beijing 100084 (CN); WEI, Yingdong, Beijing 100084 (CN); LU, Chao, Beijing 100084 (CN); LI, Zhanhe, Beijing 100084 (CN); LI, Ziming, Beijing 100084 (CN)
(74) Representative: Yang, Shu
(86) International application number: PCT/CN2021/135050
(87) International publication number: WO 2023/279641

(57) **Abstract**

The present disclosure discloses a flexible direct-current traction power supply system connected to a distributed external power source and an operation method thereof. The system includes a plurality of flexible direct-current traction substations. Each of the plurality of flexible direct-current traction substations includes: two incoming power lines connected to an external power source; sectionalized power busbars respectively connected to incoming power lines in two branches; a plurality of traction transformers and a plurality of bidirectional converters respectively connected to the two sectionalized power busbars; direct current sides of the plurality of converters connected to a traction busbar, the traction busbar being connected to an overhead line; a distribution transformer connected to the power busbar through a circuit breaker and a medium voltage interconnecting line connected to a power busbar in an adjacent flexible direct-current traction substation through a circuit breaker. Therefore, it is possible to reduce the demand for external power source in the flexible direct-current traction power supply system, and improve a capacity utilization rate of a traction substation device and a utilization rate of locomotive regenerative braking energy, which allows to conserve energy and carbon emission and control power quality of an alternating-current and direct-current system, thereby bringing numerous advantages to the traction power supply system. In addition, a technical scheme may be provided for practical engineering of flexible direct-current traction power supply technology in rail transit.

## Description

### CROSS-REFERENCE TO RELATED APPLICATION

The present application claims priority to Chinese Patent Application No. 202110773536.7, entitled "FLEXIBLE DIRECT-CURRENT TRACTION POWER SUPPLY SYSTEM CONNECTED TO DISTRIBUTED EXTERNAL POWER SOURCE AND OPERATION METHOD THEREOF", filed with China National Intellectual Property Administration on July 08, 2021 by TSINGHUA UNIVERSITY.

### FIELD

The present disclosure relates to the field of flexible direct-current traction power supply technologies, and more particularly, to a flexible direct-current traction power supply system connected to a distributed external power source and an operation method thereof.

### BACKGROUND

The flexible direct-current traction power supply technology may overcome the defects of a diode rectification power supply scheme and an energy-feedback-type power supply scheme to a great extent, making it a future development trend. With the rapid growth in urban rail transit capacity and mileage, the requirements for power supply capacity and distance of a direct-current traction power supply system increase accordingly. In order to solve the issues of high requirements for external power sources, a low utilization rate of redundancy capacity of a traction substation, too large energy consumption, or the like in a traditional direct-current traction power supply system, it is necessary to study a flexible direct-current traction power supply scheme.

Currently, research results related to the flexible direct-current traction power supply scheme mainly focus on a system structure, a power electronic topology structure, and relevant control aspects. However, practical application of the flexible direct-current traction power supply scheme inevitably involves design and selection of main wiring and an operation mode of the flexible direct-current traction power supply system. Therefore, it is essential to study the main wiring and operation mode of the flexible direct-current traction power supply system.

### SUMMARY

The present disclosure aims to solve at least one of the technical problems in the related art to some extent.

To this end, an object of the present disclosure is to provide a flexible direct-current traction power supply system connected to a distributed external power source, which is capable of lowering the demand for an external power source in the flexible direct-current traction power supply system and enhancing a capacity utilization rate of a traction substation device and a utilization rate of locomotive regenerative braking energy, allowing to conserve energy and carbon and control power quality of an alternating-current and direct-current system, thereby bringing numerous advantages to the traction power supply system. In addition, a technical scheme may be provided for practical engineering of flexible direct-current traction power supply technology in rail transit.

Another object of the present disclosure is to provide a method for operating a flexible direct-current traction power supply system connected to a distributed external power source.

In order to achieve the above objects, an embodiment in an aspect of the present disclosure provides a flexible direct-current traction power supply system connected to a distributed external power source, including: a plurality of flexible direct-current traction substations. Each of the plurality of flexible direct-current traction substations includes: a first incoming power line and a second incoming power line that are connected to an external power source; a first power busbar connected to the first incoming power line through a circuit breaker, and a second power busbar connected to the second incoming power line through a circuit breaker; a first traction transformer having one end connected to the first power busbar through a circuit breaker and another end connected to an alternating current side of a first bidirectional converter, the first bidirectional converter having a direct current side connected to a traction busbar through a circuit breaker, and the traction busbar being connected to an overhead line through a circuit breaker; a second traction transformer having one end connected to the second power busbar through a circuit breaker and another end connected to an alternating current side of a second bidirectional converter, the second bidirectional converter having a direct current side connected to the traction busbar through a circuit breaker, and the traction busbar being connected to the overhead line through a circuit breaker; a first distribution transformer connected to the first power busbar through a circuit breaker and a second distribution transformer connected to the second power busbar through a circuit breaker. Each of the first power busbar and the second power busbar of the flexible direct-current traction substation is connected to a power busbar in an adjacent flexible direct-current traction substation through a circuit breaker and a medium voltage interconnecting line.

In addition, the flexible direct-current traction power supply system connected to the distributed external power source according to the above embodiments of the present disclosure may further have the following additional technical features.

In an embodiment of the present disclosure, the flexible direct-current traction power supply system connected to the distributed external power source further includes: removing the circuit breaker and the medium voltage interconnecting line between power busbars of two flexible direct-current traction substations.

In an embodiment of the present disclosure, the flexible direct-current traction power supply system connected to the distributed external power source further includes: removing a circuit breaker and an incoming power line between a power busbar and an external power source of part of the plurality of flexible direct-current traction substations, such that the external power source of the part of the plurality of flexible direct-current traction substations is removed, and the flexible direct-current traction substation not connected to an incoming power line is powered by an external power source of an adjacent flexible direct-current traction substation and a medium voltage interconnecting line between flexible direct-current traction substations during normal operation.

In an embodiment of the present disclosure, a busbar switch is provided between the first power busbar and the second power busbar, wiring is performed through single busbar sectionalization, and the busbar switch is switched off during normal operation; or the first power busbar and the second power busbar are an independent dual-power busbar.

In an embodiment of the present disclosure, the flexible direct-current traction power supply system connected to the distributed external power source further includes: at least a group of a bidirectional converter and a traction transformer provided between the power busbar and the traction busbar.

In an embodiment of the present disclosure, during normal operation of the flexible direct-current traction substation, a plurality of bidirectional converters in the flexible direct-current traction substation is in parallel operation, and traction power is balancedly distributed among sectionalized power busbars.

In an embodiment of the present disclosure, when an external power source or an incoming power line of the flexible direct-current traction substation in a branch fails, based on different fault types, a bidirectional converter to which the corresponding power busbar belongs is blocked or cut off, or power is taken from an overhead line to a station auxiliary load in a predetermined control mode, or it continues to operate and takes power through the medium voltage interconnecting line from an external power source of the adjacent flexible direct-current traction substation; an external power source and a bidirectional converter of the flexible direct-current traction substation in another branch are not affected; a traction load of the flexible direct-current traction system is powered by one or more bidirectional converters, that operates normally, in each of the plurality of flexible traction substations; and the station auxiliary load in the branch is powered from the overhead line by the bidirectional converter in the branch, or is powered by a power busbar of the flexible direct-current traction substation in the other branch through a switched-on busbar switch, or is powered by the medium voltage interconnecting line from the external power source of the adjacent flexible direct-current traction substation.

In an embodiment of the present disclosure, when external power source or incoming power lines of the flexible direct-current traction substation in both branches fail, a traction load of the flexible direct-current traction system is powered by one or more bidirectional converters, that operates normally, in each of the plurality of flexible traction substations; and a station auxiliary load of the flexible direct-current traction substation is powered by a bidirectional converter from an overhead line, or is powered by a medium voltage interconnecting line from an external power source of the adjacent flexible direct-current traction substation.

In an embodiment of the present disclosure, when a branch to which a power busbar of a flexible direct-current traction substation not connected to an incoming power line belongs fails, or both branches to which power busbars belong fail, or a medium voltage interconnecting line fails, the power busbar takes power from a non-faulty external power source or a non-faulty power busbar through switching a medium voltage interconnecting line or switching on a busbar switch.

In order to achieve the above objects, an embodiment in an aspect of the present disclosure provides a method for operating a flexible direct-current traction power supply system connected to a distributed external power source. For any flexible direct-current traction substation, the method includes: during normal operation, a plurality of bidirectional converters being in parallel operation, and traction power being balancedly distributed between sectionalized power busbars; when an external power source or an incoming power line of the flexible direct-current traction substation connected to an incoming power line fails, based on different fault types, blocking or cutting off a bidirectional converter to which the corresponding power busbar belongs, or taking power from an overhead line to a station auxiliary load in a predetermined control mode, or continuing to operate and taking power through the medium voltage interconnecting line from an external power source of the adjacent flexible direct-current traction substation; wherein an external power source and a bidirectional converter of the flexible direct-current traction substation in another branch are not affected; powering a traction load of the flexible direct-current traction system by one or more bidirectional converters, that operates normally, in each of the plurality of flexible traction substations; and powering the station auxiliary load in the branch from the overhead line by the bidirectional converter in the branch, or by a power busbar of the flexible direct-current traction substation in the other branch through a switched-on busbar switch, or by the medium voltage interconnecting line from the external power source of the adjacent flexible direct-current traction substation; when both external power sources or both incoming power lines of the flexible direct-current traction substation connected to the incoming power lines fail, powering a traction load of the flexible direct-current traction system by one or more bidirectional converters, that operates normally, in each of the plurality of flexible traction substations; and powering a station auxiliary load of the flexible direct-current traction substation by the bidirectional converter from an overhead line, or by the medium voltage interconnecting line from an external power source of the adjacent flexible direct-current traction substation; and when a branch to which a power busbar of a flexible direct-current traction not connected to an incoming power line belongs fails, or both branches to which power busbars belong fail, or a medium voltage interconnecting line in a branch fails, the power busbar taking power from a non-faulty external power source or a non-faulty power busbar through switching a medium voltage interconnecting line or switching on a busbar switch.

The flexible direct-current traction power supply system connected to the distributed external power source and the operation method thereof according to the embodiments of the present disclosure have the following advantages.
1) They possess the advantage of optimizing configuration of the external power source. They are compatible with various voltage levels of external power sources, such as 10/35kV, which may reduce a number of external power sources by approximately 25% and decrease capacity of external power sources by about 50%. Through system-level wide-area coordination control between traction substations, peak power of a single traction substation is lowered. In a normal operation mode, multiple section busbars within the traction substation power both the traction load and the station auxiliary load, resulting in more balanced power of incoming lines in both branches, thereby significantly lowering standby capacity of the incoming lines. In a fault operation mode, the converter may quit the operation or adopt a special control mode to provide mutual support through the system-level wide-area coordination control, allowing for a remarkable reduction in standby capacity of a medium-voltage looped network.
2) They possess the advantage of improved transport capacity. By utilizing decoupling characteristics of a power electronic converter, an electrical connection between a public power grid and the overhead line is transformed into an energy connection, thereby eliminating the influence of voltage drops of a public power grid, the traction transformer, and a rectifier unit on a voltage of the overhead line. Through flexible voltage control technology, an improvement in voltage stability of the overhead line is realized under normal and fault working conditions, allowing for an increase in train density on the basis that the voltage of the overhead line is ensured to remain within a reasonable operation range.
3) They possess the advantage of an improved utilization rate of regenerative energy. The system-level wide-area coordination control between the traction substations actively regulates system load flow, which increases a utilization rate of locomotive regenerative energy to about 90%.

Additional aspects and advantages of the present disclosure will be provided in part in the following description, or will become apparent in part from the following description or can be learned from practice of the present disclosure.

### BRIEF DESCRIPTION OF THE DRAWINGS

The above and/or additional aspects and advantages of the present disclosure will become apparent and readily appreciated from the following description of the embodiments in conjunction with the accompanying drawings.
FIG. 1 is a schematic structural diagram of a flexible direct-current traction power supply system connected to a distributed external power source according to an embodiment of the present disclosure.
FIG. 2 is a schematic structural diagram of a flexible direct-current traction power supply system connected to a distributed external power source according to another embodiment of the present disclosure.
FIG. 3 is a schematic structural diagram of a flexible direct-current traction power supply system connected to a distributed external power source according to yet another embodiment of the present disclosure.
FIG. 4 is a schematic structural diagram of a flexible direct-current traction power supply system connected to a distributed external power source according to still yet another embodiment of the present disclosure.
FIG. 5 is a schematic diagram of a dual power take circuit of a control and protection system of a converter according to an embodiment of the present disclosure.
FIG. 6 is a flowchart of a method for operating a flexible direct-current traction power supply system connected to a distributed external power source according to an embodiment of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

A flexible direct-current traction power supply system connected to a distributed external power source and an operation method thereof according to the embodiments of the present disclosure are described with reference to the accompanying drawings.

A flexible direct-current traction power supply system connected to a distributed external power source according to an embodiment of the present disclosure is described first with reference to the accompanying drawings.

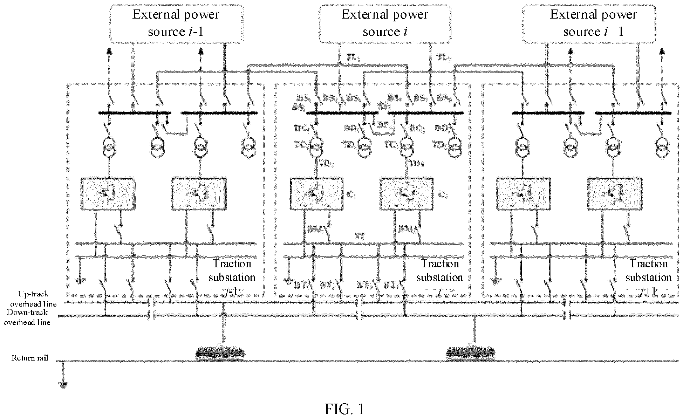

FIG. 1 is a schematic structural diagram of a flexible direct-current traction power supply system connected to a distributed external power source according to an embodiment of the present disclosure.

As illustrated in FIG. 1, the flexible direct-current traction power supply system connected to the distributed external power source includes a plurality of flexible direct-current traction substations.

Optionally, each of the plurality of flexible direct-current traction substations includes an external power source and a traction substation. Each flexible direct-current traction substation includes the following content. A first incoming power line TL₁ and a second incoming power line TL₂ are connected to an external power source. A first power busbar SS₁ is connected to the first incoming power line TL₁ through a circuit breaker BS₂, and a second power busbar SS₂ is connected to the second incoming power line TL₂ through a circuit breaker BS₅.

A first traction transformer TC₁ has one end connected to the first power busbar SS₁ through a circuit breaker BC₁ and another end connected to an alternating current side of a first bidirectional converter C₁. The first bidirectional converter C₁ is connected to a traction busbar ST through a circuit breaker. As a specific connection mode, a positive electrode of the first bidirectional converter C₁ on a direct current side is connected to a positive electrode of the traction busbar ST through a circuit breaker BM₁ and a negative electrode of the first bidirectional converter C₁ on a direct current side is connected to a negative electrode of the traction busbar ST. Moreover, the positive electrode of the traction busbar ST is connected to an overhead line through a circuit breaker. In an example of the present disclosure, the negative electrode of the traction busbar ST is grounded.

A second traction transformer TC₂ has one end connected to the second power busbar SS₂ through a circuit breaker BC₂ and another end connected to an alternating current side of a second bidirectional converter C₂. The second bidirectional converter C₂ is connected to the traction busbar ST through a circuit breaker. As a specific connection mode, a positive electrode of the second bidirectional converter C₂ on a direct current side is connected to the positive electrode of the traction busbar ST through a circuit breaker BM₂ and a negative electrode of the second bidirectional converter C₂ on a direct current side is connected to the negative electrode of the traction busbar. Moreover, the positive electrode of the traction busbar ST is connected to the overhead line through a circuit breaker. In an example of the present disclosure, the negative electrode of the traction busbar ST is grounded.

A first distribution transformer TD₁ is connected to the first power busbar SS₁ through a circuit breaker BD₁, and a second distribution transformer TD₂ is connected to the second power busbar SS₂ through a circuit breaker BD₂.

Each of the first power busbar SS₁ and the second power busbar SS₁ of the flexible direct-current traction substation is connected to a power busbar in an adjacent flexible direct-current traction substation through a circuit breaker and a medium voltage interconnecting line.

In some embodiments, the flexible direct-current traction power supply system connected to the distributed external power source further includes: removing the circuit breaker and the medium voltage interconnecting line between power busbars of two flexible direct-current traction substations.

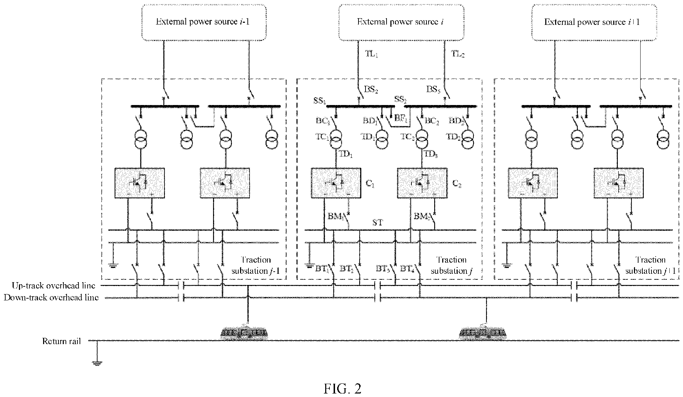

It can be understood that, as illustrated in FIG. 2, no medium voltage interconnecting line may be provided between two flexible direct-current traction substations.

In some embodiments, the flexible direct-current traction power supply system connected to the distributed external power source further includes: removing a circuit breaker and an incoming power line between a power busbar and an external power source of part of the plurality of flexible direct-current traction substations, such that the external power source of the part of the plurality of flexible direct-current traction substations is removed, and the flexible direct-current traction substation not connected to an incoming power line is powered by an external power source of an adjacent flexible direct-current traction substation and a medium voltage interconnecting line between flexible direct-current traction substations during normal operation.

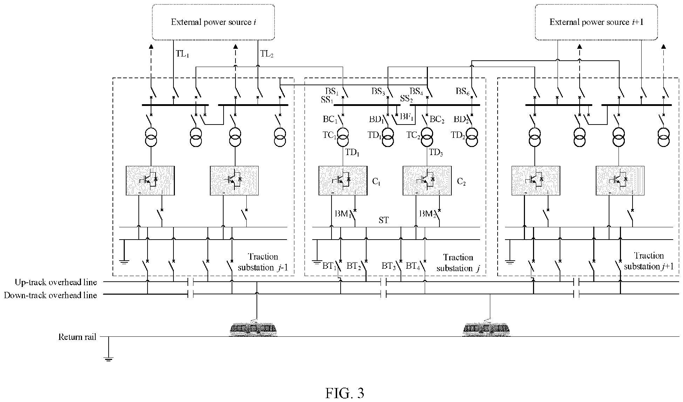

It can be understood that, in a certain flexible direct-current traction substation, the external power source may not be connected through the incoming power line, and power is taken by utilizing the medium voltage interconnecting line between the flexible direct-current traction substations from an external power source of the adjacent flexible direct-current traction substation, as illustrated in FIG. 3. A power busbar SS₁ and a power busbar SS₂ of a traction substation *j* supply power through a medium voltage interconnecting line between the flexible direct-current traction substation *j* and a flexible direct-current traction substation *j*-1, and between the flexible direct-current traction substation *j* and a flexible direct-current traction substation *j*+1.

In some embodiments, during normal operation of the flexible direct-current traction substation, a plurality of bidirectional converters in the flexible direct-current traction substation is in parallel operation, and traction power is balancedly distributed among sectionalized power busbars.

In some embodiments, when an external power source or an incoming power line of the flexible direct-current traction substation in a branch fails, based on different fault types, a bidirectional converter to which the corresponding power busbar belongs is blocked or cut off, or power is taken from an overhead line to a station auxiliary load in a predetermined control mode, or it continues to operate and takes power through the medium voltage interconnecting line from an external power source of the adjacent flexible direct-current traction substation; an external power source and a bidirectional converter of the flexible direct-current traction substation in another branch are not affected; a traction load of the flexible direct-current traction system is powered by one or more bidirectional converters, that operates normally, in each of the plurality of flexible traction substations; and the station auxiliary load in the branch is powered from the overhead line by the bidirectional converter in the branch, or is powered by a power busbar of the flexible direct-current traction substation in the other branch through a switched-on busbar switch, or is powered by the medium voltage interconnecting line from the external power source of the adjacent flexible direct-current traction substation.

In some embodiments, when external power source or incoming power lines of the flexible direct-current traction substation in both branches fail, a traction load of the flexible direct-current traction system is powered by one or more bidirectional converters, that operates normally, in each of the plurality of flexible traction substations; and a station auxiliary load of the flexible direct-current traction substation is powered by a bidirectional converter from an overhead line, or is powered by a medium voltage interconnecting line from an external power source of the adjacent flexible direct-current traction substation.

In some embodiments, in the flexible direct-current traction power supply system including the flexible direct-current traction substation not connected to the incoming power line, an operation mode of a flexible direct-current traction substation connected to the incoming power line is the same as that introduced above. In the flexible direct-current traction substation not connected to the incoming power line, when an external power source or an incoming power line in a branch fails, or external power source or the incoming power lines in both branches fail, the power busbar takes power from a non-faulty external power source or a non-faulty power busbar through switching a medium voltage interconnecting line or switching on a busbar switch.

When a medium voltage interconnecting line in the flexible direct-current traction substation not connected to the incoming power line fails, the power busbar takes power from the non-faulty external power source or the non-faulty power busbar through switching the interconnecting line or switching on the busbar switch; or the bidirectional converter continues to operate in a controlled state when the medium voltage interconnecting line is not switched, and power is taken by the bidirectional converter from the overhead line.

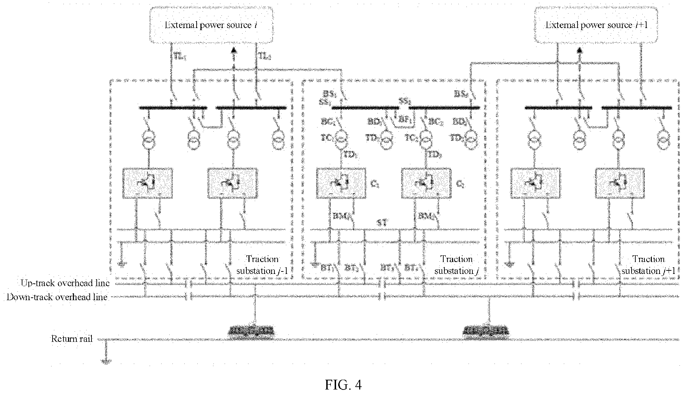

In FIG. 3, in one flexible direct-current traction substation not connected to the incoming power line, power busbars in both branches are respectively connected to power busbars of two adjacent flexible direct-current traction substations, and each power busbar may be powered by the incoming power lines in both branches. As another connection mode of the flexible direct-current traction substation not connected to the incoming power line, as illustrated in FIG. 4, each power busbar is only connected to a power busbar of the adjacent flexible direct-current traction substation in one branch.

In FIG. 4, each power busbar of the flexible direct-current traction substation not connected to the incoming power line is only powered by the incoming power line in one branch. For example, the power busbar SS₁ of the traction substation *j* is powered by a medium voltage interconnecting line between the flexible direct-current traction substation *j*-1 and the flexible direct-current traction substation *j*, and the power busbar SS₂ of the traction substation *j* is powered by a medium voltage interconnecting line between the flexible direct-current traction substation *j*+1 and the flexible direct-current traction substation *j*. In addition, the remaining structure of FIG. 4 is the same as that of FIG. 3.

In a system illustrated in FIG. 4, during normal operation, a power supply mode of the flexible direct-current traction substation connected to the incoming power line is the same as that illustrated in FIG. 1 and FIG. 2; and in the flexible direct-current traction substation not connected to the incoming power line, the power busbar takes power from the external power source of the adjacent substation through the medium voltage interconnecting line.

In the system illustrated in FIG. 4, when the external power source or the incoming power line in one branch fails, the power supply mode of the flexible direct-current traction substation connected to the incoming power line is the same as the system illustrated in FIG. 1 and FIG. 2; for the flexible direct-current traction substation not connected to the incoming power line, the external power source and the bidirectional converter of the flexible direct-current traction substation in the other branch are not affected; the traction load of the flexible direct-current traction system is powered by the one or more bidirectional converters, that operates normally, in each of the plurality of flexible traction substations; and the station auxiliary load in the branch is powered from the overhead line by the bidirectional converter in the branch, or is powered by the power busbar of the flexible direct-current traction substation in the other branch through the switched-on busbar switch.

When the external power source or the incoming power lines in both branches fail, the power supply mode of the flexible direct-current traction substation connected to the incoming power line is the same as the system illustrated in FIG. 1 and FIG. 2; for the flexible direct-current traction substation not connected to the incoming power line, the traction load of the flexible direct-current traction system is powered by the one or more bidirectional converters, that operates normally, in each of the plurality of flexible traction substations; and the station auxiliary load in the branch is powered from the overhead line by the bidirectional converter in the branch, or is powered by the power busbar of the flexible direct-current traction substation in the other branch through the switched-on busbar switch.

For the flexible direct-current traction substation not connected to the incoming power line, when a medium voltage interconnecting line in one of branches fails, an external power source or a bidirectional converter in another branch are not affected; the traction load of the flexible direct-current traction system is powered by the one or more bidirectional converters, that operates normally, in each of the plurality of flexible traction substations; and the station auxiliary load in the branch is powered from the overhead line by the bidirectional converter in the branch, or is powered by the power busbar of the flexible direct-current traction substation in the other branch through the switched-on busbar switch.

The flexible direct-current traction power supply system connected to the distributed external power source according to an embodiment of the present disclosure will be described in detail below.

The flexible direct-current traction power supply system illustrated in FIG. 1 includes a medium-voltage looped network. Each of the first power busbar SS₁ and the second power busbar SS₂ is connected to a power busbar in an adjacent flexible direct-current traction substation through a circuit breaker.

Specifically, in conjunction with the flexible direct-current traction power supply system illustrated in FIG. 1, provided are *m* external power sources and *n* traction substations. FIG. 1 shows a schematic diagram of main wiring by taking external power sources i-1, *i,* and *i*+1 and traction substations *j*-1, j, and *j*+1 in a distributed power supply mode as an example. For the jth traction substation T*ⱼ*, two incoming power lines TL₁ and TL₂ are provided. Moreover, a voltage level of each of the two incoming power lines TL₁ and TL₂ may be 220kV, 110kV, 35kV, or 10kV, but not limited to the foregoing several voltage levels. The incoming power line TL₁ and the incoming power line TL₂ are respectively connected to the power busbar SS₁ and the power busbar SS₂ through the circuit breaker BS₂ and the circuit breaker BS₅. The power busbar SS₁ and the power busbar SS₂ are respectively connected to the external power source *i*-1 through the circuit breaker BS₁ and the circuit breaker BS₄, and respectively connected to the external power source *i*+1 through the circuit breaker BS₃ and the circuit breaker BS₆. The power busbar SS₁ and the power busbar SS₂ are respectively connected to the traction transformer TC₁ and the traction transformer TC₂ through circuit breakers BC₁ and BC₂. The traction transformer TC₁ and the traction transformer TC₂ are respectively connected to the bidirectional converter C₁ and the bidirectional converter C₂. The power busbars SS₁ is connected to the distribution transformer TD₁ through the circuit breaker BD₁ to power the station auxiliary load. The power busbar SS₂ is connected to the distribution transformer TD₂ through the circuit breaker BD₂ to power the station auxiliary load. Each of positive electrodes of the bidirectional converter C₁ and the bidirectional converter C₂ is respectively connected to the traction busbar ST through the circuit breaker BM₁ and the circuit breaker BM₂, and negative electrodes of the bidirectional converter C₁ and the bidirectional converter C₂ are grounded. A voltage level of the traction busbar ST may be 3kV, 1.5kV, or 750V, but is not limited to the foregoing several voltage levels. Moreover, the traction busbar ST is connected to the overhead line through the circuit breaker, and the overhead line may include an up-track overhead line and a down-track overhead line.

The medium-voltage looped network is composed of the power busbar of the flexible direct-current traction substation and a circuit breaker between power busbars of different flexible direct-current traction substations. The medium-voltage looped network only needs to power the station auxiliary load of the flexible direct-current traction substation rather than power the traction load.

In FIG. 1, in the normal operation mode, the rest of circuit breakers are turned on except that a sectionalized circuit breaker BF₁ of the power busbar and a circuit breaker between the power busbars of the traction substations are turned off.

In a case where the external power source or the incoming power line of the flexible direct-current traction substation in a branch fails, a faulty incoming line is cut off, a bidirectional converter on the power busbar corresponding to the faulty incoming line is blocked or cut off, or power is taken from the overhead line to the station auxiliary load in the predetermined control mode, or it continues to operate, and the power is taken through the medium voltage interconnecting line from the external power source of the adjacent flexible direct-current traction substation.

In a case where the external power source or the incoming power lines of the flexible direct-current traction substation in both branches fail, the faulty incoming line is cut off, the circuit breaker BS₃ and the circuit breaker BS₄ between the power busbars of the flexible direct-current traction substations are switched on; the circuit breaker BS₁ and the circuit breaker BS₆ between the power busbars of the flexible direct-current traction substations, or the circuit breaker BS₁ and the circuit breaker BS₄ between the power busbars of the flexible direct-current traction substations are switched on, or the circuit breaker BS₃ and the circuit breaker BS₆ between the power busbars of the flexible direct-current traction substations are switched on. Moreover, the adjacent flexible direct-current traction substation supplies power, and the bidirectional converter on the power busbar corresponding to the faulty incoming line is blocked or cut off, or power is taken from the overhead line to the station auxiliary load in the predetermined control mode, or it continues to operate, and the power is taken through the medium voltage interconnecting line from the external power source of the adjacent flexible direct-current traction substation.

In a case where the bidirectional converter fails, the bidirectional converter quits operation, and a switch between the faulty bidirectional converter and the traction busbar and a switch between the faulty bidirectional converter and the power busbar are switched off.

In the flexible direct-current traction power supply system, predetermined system-level wide-area coordination control should be used to regulate a voltage or power of each flexible direct-current traction substation, resulting in a smaller voltage deviation of the whole line, more balanced power output of the flexible direct-current traction substation, a higher energy utilization rate, and the ability for mutual support among various flexible direct-current traction substations under a fault condition.

Each flexible direct-current traction substation is connected to converters of two different sections of power busbars and employs dynamic current-sharing control.

In some embodiments, as illustrated in FIG. 2, the medium-voltage looped network may also be canceled, and a circuit breaker and a medium voltage interconnecting line between the flexible direct-current traction substations may be omitted.

In the flexible direct-current traction power supply system illustrated in FIG. 2, provided are *m* external power sources and *n* traction substations. FIG. 2 shows a schematic diagram of the main wiring by taking external power sources *i*-1, *i,* and *i*+1 and traction substations *j*-1, *j,* and *j*+1 in the distributed power supply mode as an example. For the *j*th traction substation T*ⱼ*, the two incoming power lines TL₁ and TL₂ are provided. Moreover, the voltage level thereof may be 220kV, 110kV, 35kV, or 10kV, but not limited to the foregoing several voltage levels. The incoming power line TL₁ and the incoming power line TL₂ are respectively connected to the power busbar SS₁ and the power busbar SS₂ through the circuit breaker BS₂ and the circuit breaker BS₅. The power busbar SS₁ and the power busbar SS₂ are respectively connected to the traction transformer TC₁ and the traction transformer TC₂ through circuit breakers BC₁ and BC₂. The traction transformer TC₁ and the traction transformer TC₂ are respectively connected to the bidirectional converter C₁ and the bidirectional converter C₂. The power busbars SS₁ is connected to the distribution transformer TD₁ through the circuit breaker BD₁ to power the station auxiliary load. The power busbar SS₂ is connected to the distribution transformer TD₂ through the circuit breaker BD₂ to power the station auxiliary load. Each of the positive electrodes of the bidirectional converter C₁ and the bidirectional converter C₂ is respectively connected to the traction busbar ST through the circuit breaker BM₁ and the circuit breaker BM₂, and the negative electrodes of the bidirectional converter C₁ and the bidirectional converter C₂ are grounded. The voltage level of the traction busbar ST may be 3kV, 1.5kV, or 750V, but is not limited to the foregoing several voltage levels. Moreover, the traction busbar ST is connected to the overhead line through the circuit breaker, and the overhead line may include the up-track overhead line and the down-track overhead line.

In a connection of FIG. 2, in the case where the external power source or the incoming power line of the flexible direct-current traction substation in one branch fails, the faulty incoming line is cut off, the bidirectional converter on the power busbar corresponding to the faulty incoming line is blocked or cut off, or power is taken from the overhead line to the station auxiliary load in the predetermined control mode.

In the connection of FIG. 2, in the case where the external power source or the incoming power lines of the flexible direct-current traction substation in both branches fail, the faulty incoming line is cut off, the bidirectional converter on the power busbar corresponding to the faulty incoming line continues to operate in the controlled state. Moreover, the power is taken from the overhead line by the bidirectional converter to the station auxiliary load.

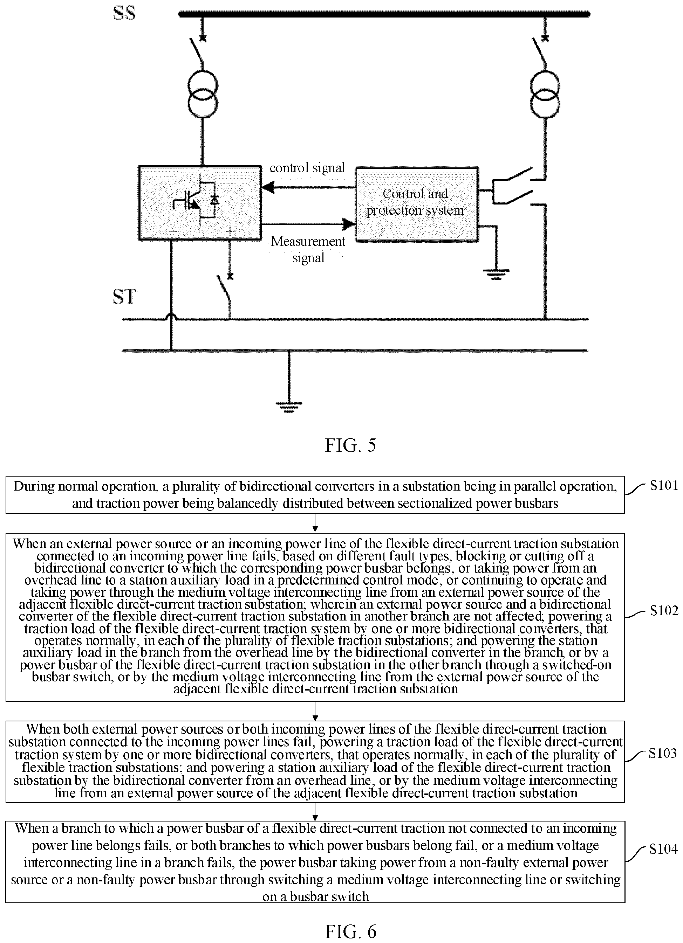

In the connection of FIG. 2, a control and protection system of the bidirectional converter may take power from the external power source and the overhead line, and a dual power take circuit of the bidirectional converter is illustrated in FIG. 5. The control and protection system of the bidirectional converter may take power from the power busbar SS or the traction busbar ST.

In some embodiments, as illustrated in FIG. 3, part of the plurality of flexible direct-current traction substations may not be connected to the external power source through the incoming power line. Compared with the flexible direct-current traction power supply system connected to the distributed external power source illustrated in FIG. 1 and FIG. 2, part of the plurality of flexible direct-current traction substations omits the external power source and incoming lines of the external power sources in two branches. In FIG. 3, the flexible direct-current traction substation *j*-1 and the flexible direct-current traction substation *j*+1 are flexible direct-current traction substations connected to the incoming power line, and the flexible direct-current traction substation *j* is the flexible direct-current traction substation not connected to the incoming power line. The flexible direct-current traction substation *j* has the same remaining structure as that of FIG. 1 and FIG. 2 except for lacking the external power source and the incoming power lines in two branches.

Specifically, in the flexible direct-current traction power supply system connected to the distributed external power source of FIG. 3, a part of the plurality of flexible direct-current traction substations is connected to the external power source through the incoming power line, another part of the plurality of flexible direct-current traction substations is connected to the external power source without the incoming power line. During normal operation, an operation mode of the flexible direct-current traction substation connected to the incoming power line is the same as that of the flexible direct-current traction power supply system illustrated in FIG. 1 and FIG. 2; and for the flexible direct-current traction substation not connected to the incoming power line, the power busbar takes power from the external power source of the adjacent flexible direct-current traction substation through the medium voltage interconnecting line.

When the external power source or the incoming power line of the flexible direct-current traction substation in one branch fails, the flexible direct-current traction substation connected to the incoming power line has the same operation mode as the flexible direct-current traction power supply system illustrated in FIG. 1 and FIG. 2. For the flexible direct-current traction substation not connected to the incoming power line, the power busbar takes power from an external power source of a non-faulty adjacent flexible direct-current traction substation through the medium voltage interconnecting line by switching an interconnecting line.

When the external power source or the incoming power lines of the flexible direct-current traction substation in both branches fail, the flexible direct-current traction substation connected to the incoming power line has the same operation mode as the flexible direct-current traction power supply system illustrated in FIG. 1 and FIG. 2. For the flexible direct-current traction substation not connected to the incoming power line, the power busbar takes power from the non-faulty external power source or the non-faulty power busbar through switching the medium voltage interconnecting line or switching on the busbar switch.

For the flexible direct-current traction not connected to an incoming power line, when a medium voltage interconnecting line in one branch fails, the power busbar takes power from the non-faulty external power source or the non-faulty power busbar through switching the interconnecting line or switching on the busbar switch; or the medium voltage interconnecting line is not switched, the bidirectional converter continues to operate in the controlled state, and the power is taken by the bidirectional converter from the overhead line to the station auxiliary load.

It can be understood that, as illustrated in FIG. 1, in a distributed power supply system for a flexible direct-current traction power supply system without the medium voltage interconnecting line, each flexible direct-current traction substation at least includes two independent power busbars leading from different external incoming power lines, and a sectionalized circuit breaker of the two power busbars are in a disconnected state under a normal condition; a power busbar in each branch is connected to at least a group of a bidirectional converter and a corresponding traction transformer; the medium voltage interconnecting line and the tie switch are provided between the power busbars of the adjacent flexible direct-current traction substation; when an incoming line of the external power source of the flexible direct-current traction substation in a branch fails, a bidirectional converter in the branch is blocked or cut off, or the power is taken from the overhead line to the station auxiliary load in the predetermined control mode, or it continues to operate and power is taken by the medium voltage interconnecting line from the external power source of the adjacent flexible direct-current traction substation, while the rest of bidirectional converters maintains operation; and when incoming lines of the external power source of the flexible direct-current traction substation in at least two branches fail, a corresponding bidirectional converter takes power from the overhead line to the station auxiliary load in the predetermined control mode; or it continues to operate, and the power is taken through the medium voltage interconnecting line from the external power source of the adjacent flexible direct-current traction substation.

In a distributed power supply system for a flexible direct-current traction power supply system with the medium voltage interconnecting line as illustrated in FIG. 2, each flexible direct-current traction substation at least includes two independent power busbars leading from different external incoming power lines, and a sectionalized circuit breaker of the power busbars in both branches is in the disconnected state under the normal condition; the power busbar in each branch is connected to the at least one group of the bidirectional converter and the corresponding traction transformer; when an incoming line of the external power source of the flexible direct-current traction substation in a branch fails, a bidirectional converter in the branch is blocked or cut off, or the power is taken from the overhead line to the station auxiliary load in a special control mode, while the rest of bidirectional converters maintains operation; and when incoming lines of the external power source of the flexible direct-current traction substation in at least two branches fail, the corresponding bidirectional converter takes power from the overhead line to the station auxiliary load in the special control mode, while the rest of bidirectional converters maintains operation.

Optionally, in a system structure diagram illustrated in FIG. 1, FIG. 2, FIG. 3, and FIG. 4, an illustrated transformer takes a dual-winding transformer an example, and may be a transformer in different forms such as a three-winding transformer, which is not limited herein.

Optionally, in the system structure diagram illustrated in FIG. 1, FIG. 2, FIG. 3, and FIG. 4, a main wiring form of the distributed power supply mode is used for description. When an actual line adopts a centralized power supply mode or a hybrid power supply mode, i.e., part of the plurality of flexible direct-current traction substations uses the centralized power supply mode and another part of the plurality of flexible direct-current traction substations uses the distributed power supply mode, and the method is also applicable and is not limited herein.

Optionally, the overhead line may be a single-row line or a dual-row line. When the overhead line is a dual-row line, a traction line is connected to an overhead line of the dual-row line through circuit breaker lines in both branches. In the system structure diagram illustrated in FIG. 1, FIG. 2, FIG. 3, and FIG. 4, rail transit includes an up-track line and a down-track line. When only a single-row line occurs in the rail transit, i.e., only an up-track line or a down-track line occurs in the rail transit, the method is equally applicable, which is not limited herein.

Optionally, a busbar switch is provided between the first power busbar and the second power busbar, wiring is performed through single busbar sectionalization, and the busbar switch is switched off during normal operation; or the first power busbar and the second power busbar are an independent dual-power busbar.

In the system structure diagram illustrated in FIG. 1, FIG. 2, FIG. 3, and FIG. 4, the power busbar in each flexible direct-current traction substation is in the form of main wiring of single busbar sectionalization, and one circuit breaker is provided between power busbars in each flexible direct-current traction substation. In addition, other wiring forms such as a double busbar may be used. The embodiments of the present disclosure do not limit this herein.

In some embodiments, the at least one group of the bidirectional converter and the traction transformer are connected between the power busbar and the traction busbar, and the number of the bidirectional converters and the number of the traction transformers is one-to-one.

In the system structure diagram illustrated in FIG. 1, FIG. 2, FIG. 3, and FIG. 4, only one bidirectional converter is connected to each section of the power busbar. In practical operation, the plurality of bidirectional converters may be connected in parallel, but a ratio of the bidirectional converters to traction transformers always remains 1:1, and their connection relationship is always constant.

Optionally, in the system structure diagram illustrated in FIG. 1, FIG. 2, FIG. 3, and FIG. 4, only two transformers are connected to each section of the power busbar to power the station auxiliary load. However, a plurality of transformers may be employed to power the station auxiliary load during actual operation.

The flexible direct-current traction power supply system connected to the distributed external power source provided according to the embodiments of the present disclosure fully utilizes the technical characteristics of the bidirectional converter. Moreover, by efficiently harnessing both the external power source of a rail transit traction system and device capacity inside the traction substation, the system remarkably improves power supply capacity and a power supply range of the direct-current traction power supply system, reduces an engineering cost of the direct-current traction power supply system, and is suitable for use of a flexible direct-current traction power supply system in newly-built urban or intercity rail transit lines or is suitable for local or full-line technical transformation of an existing direct-current traction power supply system with insufficient power supply capacity. This solution provides main wiring and an operation mode of a flexible direct-current traction power supply mode, which modifies a system structure on the premise of ensuring safety and reliability, and provides a technical solution for actual engineering of applying the flexible direct-current power supply technology in the future.

FIG. 6 is a flowchart of a method for operating a flexible direct-current traction power supply system connected to a distributed external power source according to an embodiment of the present disclosure.

As illustrated in FIG. 6, provided is the method for operating the flexible direct-current traction power supply system connected to the distributed external power source. For any flexible direct-current traction substation, the method includes steps S101 to S104.

At step S101, during normal operation, a plurality of bidirectional converters in the substation is in parallel operation, and traction power is balancedly distributed between sectionalized power busbars.

At step S102, when an external power source or an incoming power line of the flexible direct-current traction substation connected to an incoming power line fails, based on different fault types, a bidirectional converter to which the corresponding power busbar belongs is blocked or cut off, or power is taken from an overhead line to a station auxiliary load in a predetermined control mode, or it continues to operate and power is taken through the medium voltage interconnecting line from an external power source of the adjacent flexible direct-current traction substation. An external power source and a bidirectional converter of the flexible direct-current traction substation in another branch are not affected. A traction load of the flexible direct-current traction system is powered by one or more bidirectional converters, that operates normally, in each of the plurality of flexible traction substations. The station auxiliary load in the branch is powered from the overhead line by the bidirectional converter in the branch, or by a power busbar of the flexible direct-current traction substation in the other branch through a switched-on busbar switch, or by the medium voltage interconnecting line from the external power source of the adjacent flexible direct-current traction substation.

At step S103, when both external power sources or both incoming power lines of the flexible direct-current traction substation connected to the incoming power lines fail, a traction load of the flexible direct-current traction system is powered by one or more bidirectional converters, that operates normally, in each of the plurality of flexible traction substations; and a station auxiliary load of the flexible direct-current traction substation is powered by the bidirectional converter from an overhead line, or by the medium voltage interconnecting line from an external power source of the adjacent flexible direct-current traction substation.

At step S104, when a branch to which a power busbar of a flexible direct-current traction not connected to an incoming power line belongs fails, or both branches to which power busbars belong fail, or a medium voltage interconnecting line in a branch fails, the power busbar takes power from a non-faulty external power source or a non-faulty power busbar through switching a medium voltage interconnecting line or switching on a busbar switch.

The method for operating the flexible direct-current traction power supply system connected to the distributed external power source provided according to the embodiments of the present disclosure fully utilizes the technical characteristics of the bidirectional converter. Moreover, by efficiently harnessing both the external power source of the rail transit traction system and the device capacity inside the traction substation, the system remarkably improves the power supply capacity and the power supply range of the direct-current traction power supply system, reduces the engineering cost of the direct-current traction power supply system, and is suitable for the use of the flexible direct-current traction power supply system in newly-built urban or intercity rail transit lines or is suitable for the local or full-line technical transformation of the existing direct-current traction power supply system with insufficient power supply capacity. This solution provides the main wiring and the operation mode of the flexible direct-current traction power supply mode, which modifies the system structure on the premise of ensuring safety and reliability, and provides the technical solution for the actual engineering of applying the flexible direct-current power supply technology in the future.

In addition, the term "first" or "second" is only for descriptive purposes, rather than indicating or implying relative importance or implicitly indicating the number of indicated technical features. Therefore, the features associated with "first" or "second" can explicitly or implicitly include at least one of the features. In the description of the present disclosure, "plurality of" means at least two, unless otherwise specifically indicated.

In the description of this specification, descriptions with reference to the terms "an embodiment", "some embodiments", "examples", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or N embodiments or examples in a suitable manner. In addition, those skilled in the art can combine the different embodiments or examples and the features of the different embodiments or examples described in this specification without contradicting each other.

Although the embodiments of the present disclosure have been shown and described above, it can be understood that the above-mentioned embodiments are exemplary and should not be construed as limiting the present disclosure. Those of ordinary skill in the art can make changes, modifications, substitutions and modifications to the above-mentioned embodiments within the scope of the present disclosure.

## Claims

1. A flexible direct-current traction power supply system connected to a distributed external power source, comprising: a plurality of flexible direct-current traction substations, each of the plurality of flexible direct-current traction substations comprising:
a first incoming power line and a second incoming power line that are connected to an external power source;
a first power busbar connected to the first incoming power line through a circuit breaker, and a second power busbar connected to the second incoming power line through a circuit breaker;
a first traction transformer having one end connected to the first power busbar through a circuit breaker and another end connected to an alternating current side of a first bidirectional converter, the first bidirectional converter having a direct current side connected to a traction busbar through a circuit breaker, and the traction busbar being connected to an overhead line through a circuit breaker;
a second traction transformer having one end connected to the second power busbar through a circuit breaker and another end connected to an alternating current side of a second bidirectional converter, the second bidirectional converter having a direct current side connected to the traction busbar through a circuit breaker, and the traction busbar being connected to the overhead line through a circuit breaker;
a first distribution transformer connected to the first power busbar through a circuit breaker and a second distribution transformer connected to the second power busbar through a circuit breaker,
wherein each of the first power busbar and the second power busbar of the flexible direct-current traction substation is connected to a power busbar in an adjacent flexible direct-current traction substation through a circuit breaker and a medium voltage interconnecting line.

2. The flexible direct-current traction power supply system connected to the distributed external power source according to claim 1, further comprising:
removing the circuit breaker and the medium voltage interconnecting line between power busbars of two flexible direct-current traction substations.

3. The flexible direct-current traction power supply system connected to the distributed external power source according to claim 1, further comprising:
removing a circuit breaker and an incoming power line between a power busbar and an external power source of part of the plurality of flexible direct-current traction substations, such that the external power source of the part of the plurality of flexible direct-current traction substations is removed, and the flexible direct-current traction substation not connected to an incoming power line is powered by an external power source of an adjacent flexible direct-current traction substation and a medium voltage interconnecting line between flexible direct-current traction substations during normal operation.

4. The flexible direct-current traction power supply system connected to the distributed external power source according to claim 1, 2, or 3, wherein:
a busbar switch is provided between the first power busbar and the second power busbar, wiring is performed through single busbar sectionalization, and the busbar switch is switched off during normal operation; or
the first power busbar and the second power busbar are an independent dual-power busbar.

5. The flexible direct-current traction power supply system connected to the distributed external power source according to claim 1, 2, or 3, further comprising:
at least a group of a bidirectional converter and a traction transformer provided between the power busbar and the traction busbar.

6. The flexible direct-current traction power supply system connected to the distributed external power source according to claim 1, 2, or 3, wherein during normal operation of the flexible direct-current traction substation, a plurality of bidirectional converters in the flexible direct-current traction substation is in parallel operation, and traction power is balancedly distributed among sectionalized power busbars.

7. The flexible direct-current traction power supply system connected to the distributed external power source according to claim 1, 2, or 3, wherein:
when an external power source or an incoming power line of the flexible direct-current traction substation in a branch fails, based on different fault types, a bidirectional converter to which the corresponding power busbar belongs is blocked or cut off, or power is taken from an overhead line to a station auxiliary load in a predetermined control mode, or it continues to operate and takes power through the medium voltage interconnecting line from an external power source of the adjacent flexible direct-current traction substation; an external power source and a bidirectional converter of the flexible direct-current traction substation in another branch are not affected; the traction loads of the flexible direct-current traction system is powered by one or more bidirectional converters, that operate normally, in each of the plurality of flexible traction substations; and the station auxiliary load in the branch is powered from the overhead line by the bidirectional converter in the branch, or is powered by a power busbar of the flexible direct-current traction substation in the other branch through a switched-on busbar switch, or is powered by the medium voltage interconnecting line from the external power source of the adjacent flexible direct-current traction substation.

8. The flexible direct-current traction power supply system connected to the distributed external power source according to claim 1, 2, or 3, wherein:
When external power source or incoming power lines of the flexible direct-current traction substation in both branches fail, the traction loads of the flexible direct-current traction system is powered by the one or more bidirectional converters, that operate normally, in each of the plurality of flexible traction substations; and a station auxiliary load of the flexible direct-current traction substation is powered by a bidirectional converter from an overhead line, or is powered by a medium voltage interconnecting line from an external power source of the adjacent flexible direct-current traction substation.

9. The flexible direct-current traction power supply system connected to the distributed external power source according to claim 3, wherein:
when a branch to which a power busbar of a flexible direct-current traction substation not connected to an incoming power line belongs fails, or both branches to which power busbars belong fail, or a medium voltage interconnecting line fails, the power busbar takes power from a non-faulty external power source or a non-faulty power busbar through switching a medium voltage interconnecting line or switching on a busbar switch.

10. A method for operating a flexible direct-current traction power supply system connected to a distributed external power source, performed by the flexible direct-current traction power supply system connected to the distributed external power source according to claims 1 to 9, wherein for any flexible direct-current traction substation, the method comprises:
during normal operation, a plurality of bidirectional converters being in parallel operation, and traction power being balancedly distributed between sectionalized power busbars;
when an external power source or an incoming power line of the flexible direct-current traction substation connected to an incoming power line fails, based on different fault types, blocking or cutting off a bidirectional converter to which the corresponding power busbar belongs, or taking power from an overhead line to a station auxiliary load in a predetermined control mode, or continuing to operate and taking power through the medium voltage interconnecting line from an external power source of the adjacent flexible direct-current traction substation; wherein an external power source and a bidirectional converter of the flexible direct-current traction substation in another branch are not affected; the traction loads of the flexible direct-current traction system is powered by one or more bidirectional converters, that operate normally, in each of the plurality of flexible traction substations; and powering the station auxiliary load in the branch from the overhead line by the bidirectional converter in the branch, or by a power busbar of the flexible direct-current traction substation in the other branch through a switched-on busbar switch, or by the medium voltage interconnecting line from the external power source of the adjacent flexible direct-current traction substation;
when both external power sources or both incoming power lines of the flexible direct-current traction substation connected to the incoming power lines fail, powering a traction load of the flexible direct-current traction system by one or more bidirectional converters, that operates normally, in each of the plurality of flexible traction substations; and powering a station auxiliary load of the flexible direct-current traction substation by the bidirectional converter from an overhead line, or by the medium voltage interconnecting line from an external power source of the adjacent flexible direct-current traction substation; and
when a branch to which a power busbar of a flexible direct-current traction not connected to an incoming power line belongs fails, or both branches to which power busbars belong fail, or a medium voltage interconnecting line in a branch fails, the power busbar taking power from a non-faulty external power source or a non-faulty power busbar through switching a medium voltage interconnecting line or switching on a busbar switch.
